# EUROPEAN PATENT APPLICATION

(11) **EP 4 475 216 A1**
(43) Date of publication of application: **11.12.2024**
(21) Application number: 23746615.6
(22) Date of filing: 05.01.2023
(51) Int. Cl.: H01M 4/139, H01M 4/13, H01M 4/62

(54) **METHOD FOR MANUFACTURING ELECTRODE FOR LITHIUM ION SECONDARY BATTERY, BINDER FOR LITHIUM ION SECONDARY BATTERY ELECTRODE, ELECTRODE FOR LITHIUM ION SECONDARY BATTERY, AND LITHIUM ION SECONDARY BATTERY**

(30) Priority: 31.01.2022 JP 2022013715
(71) Applicant: Zeon Corporation, Tokyo 100-8246 (JP)
(72) Inventor: FUJII, Tsutomu, Tokyo 100-8246 (JP)
(74) Representative: Maiwald GmbH
(86) International application number: PCT/JP2023/000106
(87) International publication number: WO 2023/145398

(57) **Abstract**

Provided is a method of producing an electrode for a lithium ion secondary battery that can inhibit cracking of an electrode active material during electrode mixed material layer formation and improve storage characteristics of a lithium ion secondary battery. The method of producing an electrode for a lithium ion secondary battery includes: performing film formation in which composite particles in a dry state containing at least an electrode active material and a binder are pressed on a substrate to form a compressed layer on the substrate; and performing rolling in which the compressed layer is further pressed to form an electrode mixed material layer on the substrate. The binder includes a water-soluble polymer, and a temperature during pressing in at least one of the film formation and the rolling is set as not lower than a softening point of the water-soluble polymer.

## Description

### TECHNICAL FIELD

The present disclosure relates to a method of producing an electrode for a lithium ion secondary battery, a binder for a lithium ion secondary battery electrode, an electrode for a lithium ion secondary battery, and a lithium ion secondary battery.

### BACKGROUND

Secondary batteries such as lithium ion secondary batteries have characteristics such as compact size, light weight, high energy-density, and the ability to be repeatedly charged and discharged, and are used in a wide range of applications. Consequently, in recent years, studies have been made to improve methods of producing battery members such as electrodes for the purpose of achieving even higher secondary battery performance.

An electrode that is obtained by forming an electrode mixed material layer containing an electrode active material and a binding material on a current collector is typically used as an electrode of a secondary battery. One example of a known method of producing an electrode of a secondary battery is a powder forming method in which composite particles that contain at least an electrode active material and a binding material are subjected to pressure forming so as to form an electrode mixed material layer (for example, refer to Patent Literature (PTL) 1). The powder forming method differs from an application method in which a slurry that contains an electrode active material and a binding material is applied onto a current collector and is then dried to form an electrode mixed material layer in terms that the powder forming method does not suffer from limitation of productivity due to a drying step because a solvent is not used in electrode production in this method and thus has high electrode productivity.

However, in electrode production by the powder forming method, a layer that is obtained through compression and forming of composite particles is typically subjected to consolidation so as to obtain an electrode mixed material layer of desired density. Consequently, excessive stress may act on an electrode active material during a process in which compression and consolidation are performed in the powder forming method as compared to in electrode production by the application method or the like. Application of excessive stress tends to result in distortion of particles of the electrode active material, cracking of electrode active material particles, and increased electrode BET specific surface area. Moreover, cracking of electrode active material particles leads to the formation of new interfaces in the electrode active material particles and may have an adverse effect of facilitating a side reaction between the electrode active material and electrolyte solution during battery use. Specifically, this tends to lead to evolution of gas from inside of the battery, early decline of battery capacity, and so forth, and thus shortens the period for which the battery can be used.

In response to issues such as described above that affect the powder forming method, PTL 2 discloses that in production of an electrode through rolling of composite particles by rolls, splitting a rolling step into two stages and using rubber as a roll material in a first stage of the rolling step makes it possible to suppress an increase of electrode active material BET specific surface area. Moreover, PTL 3 discloses that by subjecting surfaces of negative electrode active material particles formed of graphite particles to fluorination treatment in advance so as to form a coating, and subsequently producing composite particles in a wet state, it is possible to inhibit cracking of the electrode active material that arises when a compressing operation is performed and to restrict the amount of gas evolution.

### CITATION LIST

### Patent Literature

PTL 1: JP2013-51203A
PTL 2: JP2016-062654A
PTL 3: JP2019-057431A

### SUMMARY

### (Technical Problem)

However, in electrode production by the conventional powder forming method, there is room for further improvement in terms of inhibiting cracking of an electrode active material during formation of an electrode mixed material layer and improving storage characteristics of a secondary battery that includes an obtained electrode.

Accordingly, one object of the present disclosure is to provide a method of producing an electrode for a lithium ion secondary battery that can inhibit cracking of an electrode active material during electrode mixed material layer formation and improve storage characteristics of a lithium ion secondary battery.

Another object of the present disclosure is to provide a binder for a lithium ion secondary battery electrode that can suitably be used to form composite particles that are used in the presently disclosed production method.

Yet another object of the present disclosure is to provide an electrode for a lithium ion secondary battery that contains the presently disclosed binder and a lithium ion secondary battery that includes this electrode for a lithium ion secondary battery.

### (Solution to Problem)

The inventor conducted diligent investigation with the aim of solving the problem set forth above. The inventor focused on a relationship between a water-soluble polymer such as a sodium salt of carboxymethyl cellulose (CMC) that is contained as both a dispersant and a binding material in composite particles used in the conventional powder forming method and the temperature when the composite particles are pressed to form an electrode mixed material layer. Moreover, the inventor made a new discovery that by setting the temperature during pressing as not lower than a softening point of a water-soluble polymer contained in composite particles in at least one of film formation in which the composite particles are pressed on a substrate such as a current collector to form a compressed layer and rolling in which the compressed layer formed in the film formation step is further pressed to increase the density of an electrode mixed material layer, it is possible to inhibit obstruction, by the water-soluble polymer, of displacement of an electrode active material through load received during pressing and to inhibit the occurrence of distortion and cracking of the electrode active material. In this manner, the inventor completed the present disclosure.

Specifically, with the aim of solving the problem set forth above, [1] a presently disclosed method of producing an electrode for a lithium ion secondary battery comprises: performing film formation in which composite particles in a dry state containing at least an electrode active material and a binder are pressed on a substrate to form a compressed layer on the substrate; and performing rolling in which the compressed layer is further pressed to form an electrode mixed material layer on the substrate, wherein the binder includes a water-soluble polymer, and a temperature during pressing in at least one of the film formation and the rolling is set as not lower than a softening point of the water-soluble polymer. In the case of a method of producing an electrode for a lithium ion secondary battery such as set forth above, the pressing temperature in the film formation and/or the rolling is set as not lower than the softening point of the water-soluble polymer, which makes it possible to provide an electrode for a lithium ion secondary battery that can inhibit cracking of an electrode active material in the electrode and improve storage characteristics of a lithium ion secondary battery including the electrode.

Note that the "softening point" referred to in the present disclosure can be measured by a method described in the EXAMPLES section. Also note that in a case in which the binder includes a plurality of types of water-soluble polymers in the present disclosure, the phrase "a temperature during pressing is set as not lower than a softening point of the water-soluble polymer" means that the temperature during pressing is set higher than the softening point of a water-soluble polymer that has a lowest softening point among the softening points of all water-soluble polymers included in the binder.
[2] In the presently disclosed method of producing an electrode for a lithium ion secondary battery according to the foregoing [1], it is preferable that a temperature during pressing in both the film formation and the rolling is set as not lower than the softening point of the water-soluble polymer. By setting the temperature during pressing in both the film formation and the rolling as not lower than the softening point of the water-soluble polymer, it is possible to provide an electrode for a lithium ion secondary battery that can further inhibit cracking of an electrode active material in the electrode and further improve storage characteristics of a lithium ion secondary battery including the electrode.
[3] In the presently disclosed method of producing an electrode for a lithium ion secondary battery according to the foregoing [1] or [2], it is preferable that the electrode mixed material layer has a packing rate of 70% or more. Although cracking of an electrode active material tends to occur in a situation in which an electrode mixed material layer having a high packing rate is formed by the powder forming method, cracking of an electrode active material can be effectively inhibited according to the presently disclosed production method even when the packing rate of the formed electrode mixed material layer is not less than the lower limit set forth above. Note that the "packing rate" of an electrode mixed material layer referred to in the present disclosure is a value obtained by expressing, as a percentage, a ratio of the apparent density of the electrode mixed material layer and a weight-average value of the true densities of components forming the electrode mixed material layer. The apparent density is determined by dividing the mass per unit area of the electrode mixed material layer by the thickness of the electrode mixed material layer.
[4] In the presently disclosed method of producing an electrode for a lithium ion secondary battery according to any one of the foregoing [1] to [3], it is preferable that electrode BET specific surface area is not more than 1.5 times BET specific surface area of the electrode active material. When a ratio of the BET specific surface area of the electrode relative to the BET specific surface area of the electrode active material is not more than the upper limit set forth above, decline of capacity over time and evolution of gas from inside of a battery during long-term storage of the battery can be inhibited. Note that the "BET specific surface area" referred to in the present disclosure means the specific surface area that is determined by measuring an adsorption isotherm using a gas such as nitrogen and then analyzing results thereof by the BET method and that the "BET specific surface area" can be measured by a method described in the EXAMPLES section.
[5] In the presently disclosed method of producing an electrode for a lithium ion secondary battery according to any one of the foregoing [1] to [4], it is preferable that the binder includes two or more types of water-soluble polymers. When two or more types of water-soluble polymers are included, cycle characteristics of a lithium ion secondary battery can be improved.

Moreover, with the aim of solving the problem set forth above, [6] a presently disclosed binder is a binder for composite particles used in the method of producing an electrode for a lithium ion secondary battery according to any one of the foregoing [1] to [5], comprising a water-soluble polymer, wherein the water-soluble polymer has a softening point of 150°C or lower. A binder for a lithium ion secondary battery electrode such as set forth above can suitably be used to form composite particles used in the presently disclosed production method.

Furthermore, with the aim of solving the problem set forth above, [7] a presently disclosed electrode for a lithium ion secondary battery comprises the binder according to the foregoing [6]. An electrode for a lithium ion secondary battery such as set forth above can improve storage characteristics of a lithium ion secondary battery.

Also, with the aim of solving the problem set forth above, [8] a presently disclosed lithium ion secondary battery comprises the electrode for a lithium ion secondary battery according to the foregoing [7]. A lithium secondary battery such as set forth above can display excellent storage characteristics.

### (Advantageous Effect)

According to the present disclosure, it is possible to provide a method of producing an electrode for a lithium ion secondary battery that can inhibit cracking of an electrode active material during electrode mixed material layer formation and improve storage characteristics of a lithium ion secondary battery.

Moreover, according to the present disclosure, it is possible to provide a binder that can suitably be used to form composite particles that are used in the presently disclosed production method.

Furthermore, according to the present disclosure, it is possible to provide an electrode for a lithium ion secondary battery that contains the presently disclosed binder and a lithium ion secondary battery that includes this electrode for a lithium ion secondary battery.

### DETAILED DESCRIPTION

The following provides a detailed description of embodiments of the present disclosure.

The presently disclosed method of producing an electrode for a lithium ion secondary battery can be used in production of an electrode for a lithium ion secondary battery. Moreover, the presently disclosed binder for a lithium ion secondary battery electrode can suitably be used in formation of composite particles that are used in the presently disclosed method of producing an electrode for a lithium ion secondary battery. Furthermore, the presently disclosed electrode for a lithium ion secondary battery includes an electrode mixed material layer that is obtained through pressure forming of composite particles that contain the presently disclosed binder for a lithium ion secondary battery electrode. Also, the presently disclosed lithium ion secondary battery includes the presently disclosed electrode for a lithium ion secondary battery.

Note that the presently disclosed production method and binder are preferably used in production of a negative electrode for a lithium ion secondary battery. Also note that the presently disclosed electrode for a lithium ion secondary battery is preferably a negative electrode for a lithium ion secondary battery.

### (Method of producing electrode for lithium ion secondary battery)

The presently disclosed method of producing an electrode for a lithium ion secondary battery includes: performing film formation in which composite particles in a dry state containing at least an electrode active material and a binder are pressed on a substrate to form a compressed layer on the substrate; and performing rolling in which the compressed layer is further pressed to form an electrode mixed material layer on the substrate.

By splitting a step of performing pressing into two stages and by reducing the pressure that is applied in one go to the electrode active material on the substrate in this manner, it is possible to densify the electrode mixed material layer while also further inhibiting cracking of the electrode active material in an electrode and to further improve storage characteristics of a lithium ion secondary battery including the electrode.

In the presently disclosed production method, a binder that includes a water-soluble polymer is used, and the temperature during pressing in the film formation step and/or the rolling step is set as a temperature that is not lower than the softening point of the water-soluble polymer contained in the composite particles. By performing pressing at a temperature that is not lower than the softening point of the water-soluble polymer, it is possible to provide an electrode for a lithium ion secondary battery that can inhibit cracking of the electrode active material in the electrode and improve storage characteristics of a lithium ion secondary battery including the electrode.

### <Film formation step>

In the film formation step of the presently disclosed method of producing an electrode for a lithium ion secondary battery, composite particles in a dry state are pressed on a substrate to form a compressed layer on the substrate.

### [Composite particles]

The composite particles that are used in the film formation step contain at least an electrode active material and a binder and can optionally further contain other components such as a conductive material. By using the composite particles in the film formation step, it is easy to homogenize the composition of components in an electrode mixed material layer that is finally obtained through the rolling step following the film formation step.

Moreover, the composite particles that are used in the film formation step are composite particles that are in a dry state. By using composite particles having low water content in the film formation step, it is possible to suppress adhesion of the composite particles to one another, which makes it possible to provide an electrode obtained in the film formation step with a more uniform mass per unit area and to increase the quality of the electrode. Moreover, by using composite particles that are in a dry state, electrode productivity can be increased because there is no need for drying during the film formation step.

Note that the term "dry state" as used in the present disclosure means a state in which the water content is 1 mass% or less. Also note that the "water content" of composite particles can be measured by a thermal vaporization method using a Karl Fischer water meter.

The composite particles that are used in the film formation step are preferably composite particles having a volume-average particle diameter (D50) of not less than 10 µm and not more than 200 µm. When the volume-average particle diameter (D50) is within this range, productivity in production of an electrode of a lithium ion secondary battery can be further improved.

Note that the "volume-average particle diameter (D50)" of composite particles or particles of an electrode active material or the like referred to in the present disclosure is the 50% volume-average particle diameter that is calculated through dry measurement by a particle size analyzer (for example, a Microtrac MT3300EX II produced by MicrotracBEL Corp.) based on a laser scattering/diffraction method. The 50% volume-average particle diameter is the particle diameter at a point at which cumulative frequency calculated from a small diameter end in an obtained particle size distribution (by volume) reaches 50%.

The production method of the composite particles in a dry state that are used in the film formation step is not specifically limited and may, for example, be a spray granulation method in which a slurry composition that contains an electrode active material, a binder, and a solvent such as water and that optionally contains other components such as an additive for adjusting surface tension of the slurry composition is sprayed and dried to perform granulation of composite particles or a stirred granulation method in which materials of composite particles such as an electrode active material and a binder are stirred in a high-speed stirring mixer to perform granulation of composite particles.

### «Electrode active material»

A known electrode active material can be used without any specific limitations as the electrode active material (positive electrode active material or negative electrode active material) that is contained in the composite particles.

Examples of positive electrode active materials that may be used include, but are not specifically limited to, known positive electrode active materials such as lithium-containing cobalt oxide (lithium cobalt oxide, LiCoO₂), lithium manganate (LiMn₂O₄), lithium-containing nickel oxide (LiNiO₂), a lithium-containing complex oxide of Co-Ni-Mn (Li(CoMnNi)O₂), a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a Li₂MnO₃-LiNiO₂-based solid solution, a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄. Note that one of the positive electrode active materials described above may be used individually, or two or more of the positive electrode active materials described above may be used in combination.

Examples of negative electrode active materials that may be used include, but are not specifically limited to, carbon-based negative electrode active materials, metal-based negative electrode active materials, and negative electrode active materials that are combinations thereof. The term "carbon-based negative electrode active material" refers to an active material having a main framework of carbon into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vaporgrown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite. A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based negative electrode active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Oxides such as lithium titanate can also be used. Of these negative electrode active materials, carbon-based negative electrode active materials are preferable, graphitic materials such as natural graphite and artificial graphite are more preferable, and artificial graphite is particularly preferable. Note that one of the negative electrode active materials described above may be used individually, or two or more of the negative electrode active materials described above may be used in combination.

The volume-average particle diameter (D50) of the electrode active material is preferably not less than 0.1 µm and not more than 50 µm from a viewpoint of improving productivity in electrode production and improving energy density and output characteristics of a lithium ion secondary battery.

The BET specific surface area of the electrode active material is set in accordance with the desired output characteristics and storage characteristics of a lithium ion secondary battery. In a case in which the electrode is a negative electrode, the BET specific surface area of the electrode active material is preferably not less than 0.5 m²/g and not more than 5 m²/g, though this is dependent of the application of the lithium ion secondary battery. When the BET specific surface area is not less than the lower limit set forth above, output characteristics of a lithium ion secondary battery can be improved. Moreover, when the BET specific surface area is not more than the upper limit set forth above, storage characteristics of a lithium ion secondary battery can be improved.

### <<Binder>>

The binder that is contained in the composite particles used in the presently disclosed method of producing an electrode for a lithium ion secondary battery is a component that, in an electrode produced by forming an electrode mixed material layer on a substrate using the composite particles, can hold components contained in the electrode mixed material layer so that these components are not shed from the electrode mixed material layer.

Moreover, the binder for composite particles used in the presently disclosed method of producing an electrode for a lithium ion secondary battery includes a water-soluble polymer and can optionally further include another binder component such as a particulate polymer. One type of water-soluble polymer may be used individually as the water-soluble polymer, or two or more types of water-soluble polymers may be used in combination as the water-soluble polymer. Note that the term "water-soluble" as used in the present disclosure means that when 0.5 g of a polymer is dissolved in 100 g of water at 25°C, insoluble content is less than 0.5 mass% of the polymer.

### -Water-soluble polymer-

The water-soluble polymer is thought to be suitable for use in composite particle production methods such as spray granulation and stirred granulation described above. For example, in the case of spray granulation, the use of a water-soluble polymer as a binder contained in a slurry composition is thought to improve dispersibility of the slurry composition and contribute to improving operational stability during spraying. Moreover, in the case of stirred granulation, the water-soluble polymer used as a binder during stirring is thought to contribute to particle growth during granulation. Furthermore, in the composite particles, the water-soluble polymer is present at the surface of the electrode active material and can function as a protective film that contributes to inhibiting a side reaction of the electrode active material with electrolyte solution during battery use.

The softening point of the water-soluble polymer is preferably 0°C or higher, more preferably 20°C or higher, and even more preferably 30°C or higher, and is preferably 150°C or lower, more preferably 130°C or lower, even more preferably 100°C or lower, further preferably 80°C or lower, and particularly preferably 65°C or lower. When the softening point of the water-soluble polymer is not higher than any of the upper limits set forth above, this makes it easier to set the temperature during pressing in the film formation step and/or the rolling step as not lower than the softening point of the water-soluble polymer and enables efficient production of an electrode. Moreover, when the softening point of the water-soluble polymer is not lower than any of the lower limits set forth above, this enables production of an electrode having a uniform electrode mixed material layer mass per unit area because adhesion of composite particles to one another is inhibited in the film formation step. Note that so long as at least one water-soluble polymer has a softening point that is within any of the ranges set forth above in a case in which the binder includes two or more types of water-soluble polymers, it is possible to easily set the temperature during pressing in the film formation step and/or the rolling step as not lower than the softening point of the water-soluble polymer and to efficiently produce an electrode.

Moreover, in the presently disclosed method of producing an electrode for a lithium ion secondary battery, the binder may include two or more types of water-soluble polymers.

In a case in which the binder includes two or more types of water-soluble polymers, it is preferable that the softening points of these water-soluble polymers differ by at least 20°C, and more preferable that one of the water-soluble polymers has a softening point that is higher than a specification temperature of a battery. For example, in a case in which the specification temperature of a battery is 60°C, it is preferable that the softening point of one of the water-soluble polymers is higher than 60°C. The inclusion of two or more types of water-soluble polymers having softening points that differ by at least 20°C makes it possible to provide an electrode with flexibility while also increasing strength of the electrode. Moreover, setting the softening temperature of one of the water-soluble polymers as not lower than the specification temperature of a battery enables greater resistance to stress arising inside of the battery during battery use and can be expected to improve cycle characteristics of the battery.

The water-soluble polymer of the binder for composite particles that are used in the presently disclosed method of producing an electrode for a lithium ion secondary battery may be a polymer that includes a (meth)acrylic acid ester monomer unit having a hydroxy group, for example, but is not specifically limited thereto.

The (meth)acrylic acid ester monomer unit is a repeating unit that is derived from a (meth)acrylic acid ester monomer. Note that in the present disclosure, "(meth)acryl" is used to indicate "acryl" and/or "methacryl".

Examples of monomers that can form the (meth)acrylic acid ester monomer unit having a hydroxy group include hydroxymethyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 6-hydroxyhexyl (meth)acrylate, 8-hydroxyoctyl (meth)acrylate, and 12-hydroxylauryl (meth)acrylate. Other examples include mono(meth)acrylic acid esters of polyalkylene glycols such as a mono(meth)acrylic acid ester of polyethylene glycol and a mono(meth)acrylic acid ester of polypropylene glycol. One of these (meth)acrylic acid ester monomers having a hydroxy group can be used individually, or two or more of these (meth)acrylic acid ester monomers having a hydroxy group can be used in combination.

Moreover, examples of other monomer units that the water-soluble polymer can include besides the (meth)acrylic acid ester monomer unit having a hydroxy group include an ethylenically unsaturated acid monomer unit, a (meth)acrylamide monomer unit, and a hydroxy group-containing vinyl monomer unit other than the (meth)acrylic acid ester monomer unit having a hydroxy group.

The ethylenically unsaturated acid monomer unit is a repeating unit that is derived from an ethylenically unsaturated acid monomer. Note that the term "ethylenically unsaturated acid monomer unit" as used in the present specification means a unit derived from a monomer that includes an ethylenically unsaturated bond and an acidic group. Also note that the acidic group of the ethylenically unsaturated acid monomer unit may form a salt with an alkali metal, ammonia, or the like.

Examples of ethylenically unsaturated acid monomers that can form the ethylenically unsaturated acid monomer unit include monomers that include a carboxy group in addition to an ethylenically unsaturated bond, monomers that include a sulfo group in addition to an ethylenically unsaturated bond, and monomers that include a phosphate group in addition to an ethylenically unsaturated bond.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof. Examples of monocarboxylic acids include acrylic acid, methacrylic acid, and crotonic acid. Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid. Examples of dicarboxylic acids include maleic acid, fumaric acid, and itaconic acid. Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates. Examples of acid anhydrides of dicarboxylic acids include maleic anhydride, acrylic anhydride, methylmaleic anhydride, and dimethylmaleic anhydride. An acid anhydride that produces a carboxy group through hydrolysis can also be used as a carboxy group-containing monomer.

Examples of sulfo group-containing monomers include styrene sulfonic acid, vinyl sulfonic acid, methyl vinyl sulfonic acid, (meth)allyl sulfonic acid, 3-allyloxy-2-hydroxypropane sulfonic acid, and 2-acrylamido-2-methylpropane sulfonic acid. In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate. In the present disclosure, "(meth)acryloyl" is used to indicate "acryloyl" and/or "methacryloyl".

One of these ethylenically unsaturated acid monomers can be used individually, or two or more of these ethylenically unsaturated acid monomers can be used in combination. Of these ethylenically unsaturated acid monomers, acrylic acid is preferable from a viewpoint of ease of increasing water solubility of the copolymer in water and increasing adhesiveness with a current collector.

The proportion constituted by the ethylenically unsaturated acid monomer unit in the water-soluble polymer is not specifically limited but is preferably 1 mass% or more, and more preferably 3 mass% or more, and is preferably 50 mass% or less, and more preferably 30 mass% or less.

Examples of monomers that can form the (meth)acrylamide monomer unit include (meth)acrylamide, N,N-dimethylacrylamide, N-isopropyleneacrylamide, N,N-diethylacrylamide, and N-[3-(dimethylamino)propyl]acrylamide. One of these (meth)acrylamide monomers can be used individually, or two or more of these (meth)acrylamide monomers can be used in combination. Of these (meth)acrylamide monomers, acrylamide is preferable from a viewpoint of ease of increasing water solubility of the copolymer and adjusting the softening point of the copolymer to a suitable value.

Examples of hydroxy group-containing vinyl monomers that can form the hydroxy group-containing vinyl monomer unit other than the (meth)acrylic acid ester monomer unit having a hydroxy group include N-hydroxyethylacrylamide and N-hydroxymethylacrylamide. One hydroxy group-containing vinyl monomer can be used individually, or two or more hydroxy group-containing vinyl monomers can be used in combination. Of hydroxy group-containing vinyl monomers, N-hydroxyethylacrylamide is preferable from a viewpoint of ease of increasing strength of the copolymer.

The proportion constituted by the hydroxy group-containing vinyl monomer unit in the water-soluble polymer is not specifically limited.

In particular, it is preferable that the water-soluble polymer is a copolymer including a monomer unit derived from a monomer that is water-soluble and that has a homopolymer glass-transition point of 303 K or lower. By using a monomer that is water-soluble and that has a homopolymer glass-transition point of 303 K or lower, it is easy to set the softening point of the obtained copolymer within a desired range. Note that when a polymer such as a water-soluble polymer is said to "include a monomer unit" in the present disclosure, this means that "a polymer obtained using that monomer includes a repeating unit derived from the monomer". Also note that the proportional contents of repeating units (monomer units and subsequently described structural units) in a polymer referred to in the present disclosure can be measured by a nuclear magnetic resonance (NMR) method such as ¹H-NMR or ¹³C-NMR. Moreover, the "glass-transition point" referred to in the present disclosure is the midpoint glass-transition temperature determined based on JIS K7121. Furthermore, when a monomer is said to be water-soluble in the present disclosure, this means that the solubility of the monomer in water at 20°C is 100 g/L or more or that the monomer is miscible with water at 20°C.

The monomer unit derived from the monomer that is water-soluble and that has a homopolymer glass-transition point of 303 K or lower may be a monomer unit that is derived from 2-hydroxyethyl acrylate, 4-hydroxybutyl acrylate, methoxy polyethylene glycol (meth)acrylate, polyethylene glycol mono(meth)acrylate, polyethylene glycol propylene glycol monomethacrylate, polyethylene glycol tetramethylene glycol monomethacrylate, or polypropylene glycol monoacrylate, for example, but is not specifically limited thereto. Of these monomers, it is preferable to use a (meth)acrylic acid ester monomer having a hydroxy group. In the present disclosure, "(meth)acrylate" is used to indicate "acrylate" and/or "methacrylate".

Moreover, of these compounds, 2-hydroxyethyl acrylate and 4-hydroxybutyl acrylate are preferable from a viewpoint of ease of increasing water solubility of the copolymer and setting the softening point of the copolymer within a desired range, and also chemical stability with respect to an electrolyte in a battery, with 2-hydroxyethyl acrylate being particularly preferable.

The proportion constituted by the monomer unit derived from the monomer that is water-soluble and that has a homopolymer glass-transition point of 303 K or lower in the water-soluble polymer is not specifically limited but is preferably 10 mass% or more, more preferably 30 mass% or more, and particularly preferably 50 mass% or more.

The viscosity of an aqueous solution of 1 mass% in concentration (hereinafter, referred to as the "1 mass% aqueous solution viscosity") of the water-soluble polymer that is included in the binder for composite particles used in the presently disclosed method of producing an electrode for a lithium ion secondary battery is preferably 10 mPa·S or more, and more preferably 100 mPa·S or more, and is preferably 6,000 mPa·S or less, more preferably 3,000 mPa·S or less, and particularly preferably 600 mPa·S or less. When the 1 mass% aqueous solution viscosity is not less than any of the lower limits set forth above, sedimentation of a slurry having the electrode active material dispersed therein can be inhibited, and, as a result, production stability of the composite particles can be increased. Moreover, when the 1 mass% aqueous solution viscosity is not less than any of the lower limits set forth above, improvement of adhesive strength of an electrode can be expected. Furthermore, when the 1 mass% viscosity is not more than any of the upper limits set forth above, significant reduction of solid content concentration of the slurry can be inhibited, and composite particle productivity can be increased.

Note that the 1 mass% aqueous solution viscosity is obtained by measuring the viscosity using a B-type viscometer after 2 minutes of rotation at a rotation speed of 60 rpm with a rotor having a torque value falling within a range of 10% to 100%.

The polymerization method of the water-soluble polymer may be a commonly known polymerization method such as aqueous solution polymerization, slurry polymerization, suspension polymerization, or emulsion polymerization. However, aqueous solution polymerization using water as the polymerization solvent is preferable in that a solvent removal operation is not required, solvent safety is high, and there are no issues related to mixing in of a surfactant. The aqueous solution polymerization is a method in which monomers are adjusted to specific concentrations, dissolved oxygen inside of the reaction system is thoroughly purged with an inert gas, a radical polymerization initiator is subsequently added, and heating or photo irradiation using ultraviolet light or the like is optionally performed so as to carry out a polymerization reaction.

In a situation in which water is used as the polymerization solvent and the above-described monomers are polymerized in water to produce an aqueous solution containing a copolymer, it is preferable that the pH of the aqueous solution is adjusted to not lower than 8 and not higher than 9 after polymerization. In a case in which a slurry composition is used in production of the composite particles, adjusting the pH of the aqueous solution to 8 to 9 after polymerization can increase dispersibility and stability of the slurry composition.

Emulsion polymerization is also preferable as the polymerization method of the water-soluble polymer because this enables simple production of a polymer having a high molecular weight. The emulsion polymerization can be performed with reference to a commonly known method such as a method in which polymerization is performed by neutralizing a water dispersion of an alkali-soluble resin using a metal salt such as described in JP2012-238572A, for example.

### -Particulate polymer-

The binder for composite particles used in the presently disclosed method of producing an electrode for a lithium ion secondary battery may further include a particulate polymer as previously described. The particulate polymer may be a water-insoluble polymer that can adopt a particulate form in an aqueous medium but is not specifically limited thereto. Note that when a polymer is referred to as "water-insoluble" in the present disclosure, this means that when 0.5 g of the polymer is dissolved in 100 g of water at 25°C, insoluble content is 90 mass% or more of the polymer.

Such a water-insoluble polymer may be a thermoplastic elastomer, for example, but is not specifically limited thereto. The thermoplastic elastomer is preferably a conjugated diene polymer from a viewpoint of binding strength. Specific examples of the conjugated diene polymer include, but are not specifically limited to, a copolymer that includes an aromatic vinyl monomer unit and an aliphatic conjugated diene monomer unit such as a styrene-butadiene copolymer, butadiene rubber, acrylic rubber (copolymer including an acrylonitrile unit and a butadiene unit), and hydrogenated products of these polymers.

The average particle diameter (D50) of the particulate polymer is preferably not less than 0.1 µm and not more than 1 µm. When the average particle diameter (D50) is within this range, adhesive strength of an electrode mixed material layer can be increased.

The average particle diameter (D50) of the particulate polymer refers to the particle diameter at which cumulative frequency calculated from a small diameter end reaches 50% in a particle diameter distribution (by volume) measured for the particulate polymer in a water dispersion using a laser diffraction particle size analyzer (for example, an LS 13 320XR produced by Beckman Coulter, Inc.).

The particulate polymer that can be included in the binder for composite particles used in the presently disclosed method of producing an electrode for a lithium ion secondary battery preferably has a softening point of not lower than 10°C and not higher than 150°C, though no specific limitations are made. When the softening point of the particulate polymer is within the range set forth above, it is easy to set the temperature during pressure forming of the composite particles as not lower than the softening point of the particulate polymer, which enables reduction of stress acting on the electrode active material and can thereby further inhibit cracking of the electrode active material in an electrode and further improve storage characteristics of a lithium ion secondary battery including the electrode.

The particulate polymer can be produced by a known polymerization method without any specific limitations.

### <<Other components>>

Examples of other components that the composite particles used in the presently disclosed method of producing an electrode for a lithium ion secondary battery can optionally contain besides the electrode active material and the binder include, but are not specifically limited to, components such as conductive materials and surfactants. Commonly known examples of these components can be used. Moreover, one of these components may be used individually, or two or more of these components may be used in combination.

### [Substrate]

The substrate that is used in the presently disclosed method of producing an electrode for a lithium ion secondary battery may include a current collector and a conductive adhesive layer that is optionally provided on the current collector, for example. Note that in a case in which the electrode mixed material layer that is formed on the substrate is to be peeled from the substrate and then be affixed to a current collector for use as an electrode, for example, a releasable substrate may be used as the substrate.

The current collector is a material having electrical conductivity and electrochemical durability. Specifically, the current collector may, for example, be made of a metal material such as iron, copper, aluminum, nickel, stainless steel, titanium, tantalum, gold, or platinum. In particular, a current collector formed of aluminum is preferable as a current collector for a positive electrode, whereas a current collector formed of copper is preferable as a current collector for a negative electrode. One of these materials may be used individually, or two or more of these materials may be used in combination in a freely selected ratio.

A known conductive adhesive layer can be used as the conductive adhesive layer that is optionally provided on the current collector without any specific limitations so long as it is electrically conductive and can increase adhesive strength between the current collector and the electrode mixed material layer.

### [Compressed layer]

In the film formation step that is performed in the presently disclosed method of producing an electrode for a lithium ion secondary battery, the composite particles are pressed on the substrate to form a compressed layer on the substrate as previously described. Although any commonly known method can be adopted without any specific limitations as the method by which the supplied amount of the composite particles is controlled during formation of the compressed layer, it is preferable to adopt a method in which the composite particles are supplied onto the substrate using a metering feeder or the like and in which pressing is initiated once the deposited amount thereof reaches a certain height. Such a method makes it easy to control the mass per unit area of the electrode mixed material layer that is finally obtained through the rolling step following the film formation step (i.e., the mass per unit area of the electrode mixed material layer formed on the current collector) and also the density of this electrode mixed material layer.

Note that a compressed layer may be formed at just one side of the substrate, or compressed layers may be formed at both sides of the substrate.

The pressing in the film formation step can be implemented according to a known method. For example, the composite particles can be supplied to a roll press and be subjected to roll pressing on the substrate so as to press the composite particles on the substrate and form a compressed layer. The pressure during pressing of the composite particles on the substrate can be set as appropriate according to the target electrode mixed material layer density in the rolling step following the film formation step.

### <Rolling step>

In the rolling step, the compressed layer on the substrate is further pressed so as to consolidate the compressed layer and form an electrode mixed material layer. Pressing in the rolling step that is performed in the presently disclosed method of producing an electrode for a lithium ion secondary battery can be implemented according to a known method in the same manner as in the film formation step. The pressure during pressing can be set as appropriate according to the target electrode mixed material layer density.

### [Electrode mixed material layer]

The packing rate of the electrode mixed material layer that is formed by the rolling step performed in the presently disclosed method of producing an electrode for a lithium ion secondary battery is preferably 70% or more, and more preferably 75% or more from a viewpoint of energy density of a lithium ion secondary battery. Although cracking of an electrode active material tends to occur in a situation in which an electrode mixed material layer having high density is formed by powder forming, cracking of an electrode active material can be effectively inhibited according to the presently disclosed production method even when the density of the formed electrode mixed material layer is not less than any of the lower limits set forth above.

Note that from a viewpoint of input/output characteristics, safety, and so forth of an obtained lithium ion secondary battery, the packing rate of the electrode mixed material layer is preferably 85% or less.

Moreover, in a case in which the electrode active material is graphite, the mass per unit area of the electrode mixed material layer per one side of the current collector is preferably 10 mg/cm² or more, and more preferably 15 mg/cm² or more. Although cracking of an electrode active material tends to occur in a situation in which an electrode mixed material layer having a large mass per unit area is formed by powder forming, cracking of an electrode active material can be effectively inhibited according to the presently disclosed production method even when the mass per unit area of the formed electrode mixed material layer is not less than any of the lower limits set forth above. Note that from a viewpoint of preventing reduction of battery safety caused by lithium metal deposition during charging, the mass per unit area of the electrode mixed material layer is preferably 40 mg/cm² or less, more preferably 30 mg/cm² or less, and even more preferably 18 mg/cm² or less.

### <Relationship between softening point of water-soluble polymer and temperature during pressing>

In the presently disclosed method of producing an electrode for a lithium ion secondary battery, the temperature during pressing in at least one step among the above-described film formation step and rolling step is set as not lower than the softening point of the water-soluble polymer that is included in the binder for the composite particles. In the case of such a method of producing an electrode for a lithium ion secondary battery, the pressing temperature in the film formation step and/or the rolling step is set as not lower than the softening point of the water-soluble polymer, which makes it possible to provide an electrode for a lithium ion secondary battery that can inhibit cracking of the electrode active material in the electrode and improve storage characteristics of a lithium ion secondary battery including the electrode. Although the reason for this is not clear, it is presumed to be as follows.

Note that in a case in which the composite particles contain a plurality of types of water-soluble polymers, it is more preferable that the temperature during pressing is set higher than the softening point of every water-soluble polymer that is contained in the composite particles. This is because cracking of the electrode active material in an electrode can be further inhibited and storage characteristics of a lithium ion secondary battery including the electrode can be further improved.

It is presumed that the water-soluble polymer contained in the composite particles covers the surface of the electrode active material and that there is a large contact area between the electrode active material and the water-soluble polymer. Accordingly, the water-soluble polymer that is present at the surface of the electrode active material in the composite particles acts as a major cause of obstruction of displacement of the electrode active material through load received when the composite particles are pressed to form an electrode mixed material layer. Therefore, setting the temperature during pressing of the composite particles as not lower than the softening point of the water-soluble polymer causes greater plasticization of the water-soluble polymer, and can thereby reduce shear stress acting on the electrode active material and inhibit cracking of the electrode active material. This is thought to inhibit cracking of the electrode active material during pressing and enable provision of an electrode for a lithium ion secondary battery that can improve storage characteristics of a lithium ion secondary battery including the electrode.

Note that from a viewpoint of further inhibiting cracking of the electrode active material and further improving storage characteristics of a lithium ion secondary battery, it is preferable that the pressing temperature in at least the rolling step of the presently disclosed method of producing an electrode for a lithium ion secondary battery is set as not lower than the softening point of the water-soluble polymer, and more preferable that the pressing temperature in both the film formation step and the rolling step of the presently disclosed method of producing an electrode for a lithium ion secondary battery is set as not lower than the softening point of the water-soluble polymer.

Moreover, when the softening point of the water-soluble polymer is taken to be T₁°C, the pressing temperature is preferably T₁+10°C or higher, and more preferably T₁+15°C or higher, but is not specifically limited thereto. When the pressing temperature is not lower than any of the lower limits set forth above, cracking of the electrode active material can be further inhibited, and storage characteristics of a lithium ion secondary battery can be further improved.

Note that in a case in which two or more types of water-soluble polymers are included, T₁ indicates the temperature of the softening point of a water-soluble polymer having a lowest softening point.

Moreover, in a case in which two or more types of water-soluble polymers are included, when the softening point of a water-soluble polymer having a highest softening point is taken to be T₁'°C, the pressing temperature is preferably T₁'+10°C or higher, and more preferably T₁'+15°C or higher, but is not specifically limited thereto. When the pressing temperature is not lower than any of the lower limits set forth above, cracking of the electrode active material can be further inhibited, and storage characteristics of a lithium ion secondary battery can be further improved.

### <Relationship between softening point of particulate polymer and temperature during pressing>

In the presently disclosed method of producing an electrode for a lithium ion secondary battery, it is more preferable that the binder further includes a particulate polymer and that the temperature during pressing is also not lower than a softening point of the particulate polymer. In other words, it is preferable that the pressing temperature in the film formation step and/or the rolling step is set as not lower than the softening point of the particulate polymer, more preferable that the pressing temperature in at least the rolling step is set as not lower than the softening point of the particulate polymer, and even more preferable that the pressing temperature in both the film formation step and the rolling step is set as not lower than the softening point of the particulate polymer.

By further using a particulate polymer as the binder for composite particles that are used in the presently disclosed method of producing an electrode for a lithium ion secondary battery, it is possible to improve close adherence between the electrode mixed material layer and the substrate. Moreover, when the pressing temperature is not lower than the softening point of the particulate polymer, this causes greater plasticization of the particulate polymer during pressing, which can thereby reduce shear stress acting on the electrode active material and enable the provision of an electrode for a lithium ion secondary battery that can further inhibit cracking of the electrode active material in the electrode and further improve storage characteristics of a lithium ion secondary battery including the electrode.

Note that in a case in which the binder includes a plurality of types of particulate polymers in the present disclosure, the phrase "the temperature during pressing is set as not lower than the softening point of the particulate polymer" means that the temperature during pressing is set higher than the softening point of a particulate polymer having a lowest softening point among softening points of all particulate polymers included in the binder. Moreover, in a case in which the binder includes a plurality of types of particulate polymers in the present disclosure, it is more preferable that the temperature during pressing is set higher than the softening point of every particulate polymer included in the binder. This is because cracking of the electrode active material in an electrode can be further inhibited, and storage characteristics of a lithium ion secondary battery including the electrode can be further improved.

Note that when the softening point of the particulate polymer is taken to be T₂°C, the pressing temperature is preferably T₂+10°C or higher, and more preferably T₂+20°C or higher, but is not specifically limited thereto. When the pressing temperature is not lower than any of the lower limits set forth above, cracking of the electrode active material can be further inhibited, and storage characteristics of a lithium ion secondary battery can be further improved.

Note that in a case in which two or more types of particulate polymers are included, T₂ indicates the temperature of a softening point of a particulate polymer having a lowest softening point.

Moreover, in a case in which two or more types of particulate polymers are included, when the softening point of a particle polymer having a highest softening point is taken to be T₂'°C, the pressing temperature is preferably T₂'+10°C or higher, and more preferably T₂'+20°C or higher, but is not specifically limited thereto. When the pressing temperature is not lower than any of the lower limits set forth above, cracking of the electrode active material can be further inhibited, and storage characteristics of a lithium ion secondary battery can be further improved.

### (Electrode for lithium ion secondary battery)

The electrode for a lithium ion secondary battery that can be provided by the presently disclosed method of producing an electrode for a lithium ion secondary battery includes at least an electrode mixed material layer. The electrode mixed material layer is formed using the previously described composite particles and normally contains an electrode active material and the previously described binder. Note that the electrode for a lithium ion secondary battery that can be provided by the presently disclosed method of producing an electrode for a lithium ion secondary battery may include an electrode mixed material layer at just one side of a current collector or may include electrode mixed material layers at both sides of a current collector. Also note that so long as at least one electrode mixed material layer among electrode mixed material layers included in the electrode for a lithium ion secondary battery is an electrode mixed material layer provided by the presently disclosed method of producing an electrode for a lithium ion secondary battery set forth above, storage characteristics of a lithium ion secondary battery can be improved.

In the presently disclosed method of producing an electrode for a lithium ion secondary battery, the electrode BET specific surface area is preferably not more than 1.5 times the BET specific surface area of the electrode active material, more preferably not more than 1.3 times the BET specific surface area of the electrode active material, and even more preferably not more than 1.05 times the BET specific surface area of the electrode active material. When the ratio of the BET specific surface area of the electrode relative to the BET specific surface area of the electrode active material is not more than any of the upper limits set forth above, storage characteristics of a lithium ion secondary battery can be further improved. Note that the BET specific surface area of the electrode is normally not less than 0.5 times the BET specific surface area of the electrode active material.

### (Lithium ion secondary battery)

The electrode for a lithium ion secondary battery that can be provided by the presently disclosed method of producing an electrode for a lithium ion secondary battery can be used in a lithium ion secondary battery, and this lithium ion secondary battery can display excellent storage characteristics.

The presently disclosed lithium ion secondary battery includes the presently disclosed electrode for a lithium ion secondary battery set forth above. A lithium ion secondary battery such as set forth above can display excellent storage characteristics. The presently disclosed lithium ion secondary battery normally includes electrodes (positive electrode and negative electrode), an electrolyte solution, and a separator, wherein the presently disclosed electrode for a lithium ion secondary battery is used as at least one of the positive electrode and the negative electrode, and is preferably used as the negative electrode.

### <Electrodes>

Any known electrode can be used without any specific limitations as an electrode other than the presently disclosed electrode for a lithium ion secondary battery set forth above that can be used in the lithium ion secondary battery. Specifically, an electrode obtained by forming an electrode mixed material layer on a current collector by a known production method can be used as an electrode other than the electrode for a lithium ion secondary battery set forth above.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆ is particularly preferable because it readily dissolves in solvents and exhibits a high degree of dissociation. One electrolyte may be used individually, or two or more electrolytes may be used in combination in a freely selected ratio.

The organic solvent used in the electrolyte solution is not specifically limited so long as the supporting electrolyte can dissolve therein. Examples of organic solvents that may suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. The concentration of the electrolyte in the electrolyte solution can be adjusted as appropriate. Known additives such as vinylene carbonate, fluoroethylene carbonate, and ethyl methyl sulfone may be added to the electrolyte solution.

### <Separator>

Known separators can be used without any specific limitations as the separator. In particular, a microporous membrane formed of polyolefinic (polyethylene, polypropylene, polybutene, or polyvinyl chloride) resin is preferable. Moreover, the separator may be a functional layer-equipped separator that has a functional layer (porous membrane layer or adhesive layer) provided at one side or both sides of a separator substrate.

### (Production method of lithium ion secondary battery)

The lithium ion secondary battery can be produced by, for example, stacking the positive electrode and the negative electrode with the separator in-between, performing winding, folding, or the like of the resultant laminate, as necessary, in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a repeating unit (monomer unit) formed through polymerization of a given monomer is normally, unless otherwise specified, the same as the ratio (charging ratio) of the given monomer among all monomers used in polymerization of the polymer.

Various evaluations in the examples and comparative examples were performed by the following measurement and evaluation methods.

### <Production of film of water-soluble polymer>

An aqueous solution having a water-soluble polymer dissolved therein was poured into a Teflon petri dish such as to give a film thickness after drying of 1 mm or less. The Teflon petri dish was left at rest in a hot-air oven set to 70 ± 2°C, and then a film of the water-soluble polymer was peeled from the Teflon petri dish to produce a precursor of a film of the water-soluble polymer. Next, the film precursor was vacuum dried at 120°C for 12 hours to produce a film of the water-soluble polymer.

### <Production of film of particulate polymer>

A water dispersion of a particulate polymer was poured into a Teflon petri dish such as to give a film thickness after drying of 1 mm or less. The Teflon petri dish was left at rest for 5 days to produce a precursor of a film of the particulate polymer. Next, the film precursor was peeled from the Teflon petri dish and was then vacuum dried at 60°C for 12 hours to produce a film of the particulate polymer.

### <Softening point>

Softening point measurement was performed based on JIS K7196. A film produced as described above was cut to approximately 5 mm × 5 mm in size to produce a test specimen. Next, the test specimen was set inside of a measurement apparatus such that a penetration probe (indenter) of the apparatus was in contact with the center of the test specimen. Once the temperature inside of the apparatus reached a measurement start temperature of -50°C, a load of 500 mN was applied to the film and the sample thickness was set to zero. Heating was performed under measurement conditions indicated below, and the displacement of sample thickness accompanying temperature change was recorded. After measurement was complete, the softening point was determined from the obtained temperature-displacement curve as an intersection point of a straight line determined by extrapolating, at a high-temperature side, a straight line segment observed at a low-temperature side of a temperature at which penetration of the film by the penetration probe (indenter) begins and a straight line determined by extrapolating, at a low-temperature side, a tangent at a section where penetration speed of the indenter into the film is at a maximum. This measurement was performed three times in total at different measurement points, and an average value of the measurements was taken to be the softening point of the sample.

### <<Measurement conditions>>

Measurement apparatus: TMA8311 (produced by Rigaku Corporation)
Temperature range: -50°C to 150°C
Heating rate: 5°C/min
Indenter tip diameter: Ø1 mm
Measurement atmosphere: Stream of nitrogen (flow rate: 50 mL/min)
Number of measurement points: 3

### <True density of components forming electrode mixed material layer>

The true density of components forming an electrode mixed material layer was measured using a dry-type automatic density meter (for example, an AccuPyc II 1345-10CC (produced by Shimadzu Corporation)).

Measurements for a water-soluble polymer and a particulate polymer were performed using the films thereof described above. Moreover, measurements for an electrode active material, acetylene black, and polyvinylidene fluoride were each performed using a powder thereof. Note that the electrode active material was subjected to vacuum drying under conditions of 12 hours at 200°C in advance as pre-treatment.

### <1 Mass% aqueous solution viscosity>

The 1 mass% aqueous solution viscosity of a water-soluble polymer was measured as described below. An aqueous solution having a known solid content concentration of a water-soluble polymer was diluted through addition of deionized water so as to adjust the solid content concentration of the water-soluble polymer to 1 mass% and was thoroughly stirred by a stirrer to produce a 1 mass% aqueous solution of the water-soluble polymer. The temperature of the aqueous solution was adjusted to 25°C, and then a B-type viscometer was used to rotate a rotor at a speed of 60 rpm for 2 minutes. A value of the viscosity at 2 minutes after the start of rotation of the rotor was taken to be the 1 mass% aqueous solution viscosity of the water-soluble polymer.

### <BET specific surface area X of negative electrode, BET specific surface area Y of negative electrode active material, and X/Y>

The BET specific surface area X (m²/g) of a produced negative electrode for a lithium ion secondary battery and the BET specific surface area Y (m²/g) of a negative electrode active material used in production of the negative electrode were each determined by measuring a nitrogen gas adsorption isotherm at 77 K using a Surface Area and Pore Size Distribution Analyzer BELSORP-mini II produced by MicrotracBEL Corp. and performing analysis by the BET method. Pre-treatment was performed under conditions of 2 hours at 130°C under reduced pressure. Note that the BET specific surface area of the negative electrode was determined by punching out at least 10 pieces using a 2 cm² die, loading these pieces into a sample tube, and performing measurement. The weight of the electrode mixed material layer was determined by measuring the weight of the current collector in advance and using information for the weight and number of electrode pieces loaded in the sample tube so as to subtract the weight of the current collector in the sample tube and thereby determine the weight per electrode mixed material layer. A ratio (X/Y) of these BET specific surface areas was calculated.

### <High-temperature storage characteristics>

A produced laminate cell-type lithium ion secondary battery was left at rest in a 25°C environment for 24 hours after injection of electrolyte solution. Next, the lithium ion secondary battery was charged to a cell voltage of 4.2 V by a 0.2C constant-current constant-voltage method and was then discharged to 3.0 V in a 25°C environment. The initial discharge capacity C0 was measured. Next, the lithium ion secondary battery was charged to a cell voltage of 4.2 V by a 0.2C constant-current constant-voltage method in a 25°C atmosphere. Thereafter, the lithium ion secondary battery was stored for 3 months in a 45°C atmosphere (high-temperature storage). After high-temperature storage, the lithium ion secondary battery was discharged to 3.0 V by a 0.2C constant-current method in a 25°C environment. Next, the lithium ion secondary battery was charged to 4.2 V by a 0.2C constant-current constant-voltage method and was then discharged to 3.0 V by a 0.2C constant-current method. This was repeated twice, and the discharge capacity of the second time was taken to be the post-high-temperature storage discharge capacity C1.

A capacity maintenance rate (%) was calculated (= (post-high-temperature storage discharge capacity C1/initial discharge capacity C0) × 100) and was evaluated by the following standard. A larger capacity maintenance rate indicates less degradation of the lithium ion secondary battery in high-temperature storage (i.e., better high-temperature storage characteristics).
SA: Capacity maintenance rate of 93% or more
A: Capacity maintenance rate of not less than 90% and less than 93%
B: Capacity maintenance rate of not less than 85% and less than 90%
C: Capacity maintenance rate of not less than 80% and less than 85%
D: Capacity maintenance rate of not less than 75% and less than 80%
E: Capacity maintenance rate of less than 75%

### (Example 1)

### <Synthesis of polymer A>

A 2 L septum-equipped flask including a stirrer was charged with 1,305 g of deionized water, was heated to a temperature of 40°C, and was thoroughly internally purged with nitrogen gas. Next, 25.5 g of acrylic acid aqueous solution of 98% in concentration as an ethylenically unsaturated carboxylic acid monomer, 55.0 g of 2-hydroxyethyl acrylate as a hydroxy group-containing (meth)acrylic acid ester monomer, 10.0 g of N-hydroxyethylacrylamide as a hydroxy group-containing vinyl monomer, and 25.0 g of acrylamide aqueous solution of 40% in concentration as a (meth)acrylamide monomer were mixed and were injected into the flask using a syringe. Thereafter, 2.0 g of an aqueous solution of sodium L-ascorbate of 10.0% in concentration as a polymerization accelerator was charged using a syringe, and, 10 minutes later, 20.0 g of an aqueous solution of potassium persulfate of 4.0% in concentration as a polymerization initiator was added into the flask using a syringe. Two hours after the start of the reaction, the temperature was raised to 55°C, and the polymerization reaction was caused to proceed. After 2 hours, 0.7 g of an aqueous solution of sodium hydrogen sulfite of 10.0% in concentration as a polymerization accelerator was charged using a syringe, and, 10 minutes later, 4.4 g of an aqueous solution of potassium persulfate of 4.0% in concentration as a polymerization initiator was added into the flask using a syringe. After 3 hours, 0.7 g of an aqueous solution of sodium hydrogen sulfite of 10.0% in concentration as a polymerization accelerator was charged using a syringe, and, 10 minutes later, 4.4 g of an aqueous solution of potassium persulfate of 4% in concentration as a polymerization initiator was added into the flask using a syringe. After 4 hours, 0.7 g of an aqueous solution of sodium hydrogen sulfite of 10.0% in concentration as a polymerization accelerator was charged using a syringe, and, 10 minutes later, 4.4 g of an aqueous solution of potassium persulfate of 4% in concentration as a polymerization initiator was added into the flask using a syringe. After 5 hours, 0.7 g of an aqueous solution of sodium hydrogen sulfite of 10.0% in concentration as a polymerization accelerator was charged using a syringe, and, 10 minutes later, 4.4 g of an aqueous solution of potassium persulfate of 4% in concentration as a polymerization initiator was added into the flask using a syringe. After 6 hours, a reaction inhibitor was added and the flask was opened to air to stop the polymerization reaction. The pH of the product was subsequently adjusted to 8 using ammonia aqueous solution of 8% in concentration to yield a water-soluble polymer including ethylenically unsaturated carboxylic acid monomer units, hydroxy group-containing (meth)acrylic acid ester monomer units, hydroxy group-containing vinyl monomer units, and (meth)acrylamide monomer units.

Note that the chemical composition of the obtained water-soluble polymer was the same as the ratio (charging ratio) of each monomer among all monomers used in polymerization of the water-soluble polymer. Moreover, the obtained polymer A was water-soluble according to the definition in the present specification. The softening point of the polymer A was 65°C. Moreover, the 1 mass% aqueous solution viscosity was 170 mPa·s.

### <Synthesis of polymer B>

A 2 L septum-equipped flask including a stirrer was charged with 1,195 g of deionized water, was heated to a temperature of 40°C, and was thoroughly internally purged with nitrogen gas. Next, 3.7 g of acrylic acid aqueous solution of 98% in concentration as an ethylenically unsaturated carboxylic acid monomer and 91.2 g of 2-hydroxyethyl acrylate, 22.2 g of 2-hydroxyethyl methacrylate, and 3.0 g of 4-hydroxybutyl acrylate as hydroxy group-containing (meth)acrylic acid ester monomers were mixed and were injected into the flask using a syringe. Thereafter, 2.4 g of an aqueous solution of sodium L-ascorbate of 10.0% in concentration as a polymerization accelerator was charged using a syringe, and, 10 minutes later, 24.0 g of an aqueous solution of potassium persulfate of 4.0% in concentration as a polymerization initiator was added into the flask using a syringe. Two hours after the start of the reaction, the temperature was raised to 55°C, and the polymerization reaction was caused to proceed. After 2 hours, 0.8 g of an aqueous solution of sodium hydrogen sulfite of 10.0% in concentration as a polymerization accelerator was charged using a syringe, and, 10 minutes later, 5.3 g of an aqueous solution of potassium persulfate of 4.0% in concentration as a polymerization initiator was added into the flask using a syringe. After 3 hours, 0.8 g of an aqueous solution of sodium hydrogen sulfite of 10.0% in concentration as a polymerization accelerator was charged using a syringe, and, 10 minutes later, 5.3 g of an aqueous solution of potassium persulfate of 4% in concentration as a polymerization initiator was added into the flask using a syringe. After 4 hours, 0.8 g of an aqueous solution of sodium hydrogen sulfite of 10.0% in concentration as a polymerization accelerator was charged using a syringe, and, 10 minutes later, 5.3 g of an aqueous solution of potassium persulfate of 4% in concentration as a polymerization initiator was added into the flask using a syringe. After 5 hours, 0.8 g of an aqueous solution of sodium hydrogen sulfite of 10.0% in concentration as a polymerization accelerator was charged using a syringe, and, 10 minutes later, 5.3 g of an aqueous solution of potassium persulfate of 4% in concentration as a polymerization initiator was added into the flask using a syringe. After 6 hours, a reaction inhibitor was added and the flask was opened to air to stop the polymerization reaction. The pH of the product was subsequently adjusted to 8 using ammonia aqueous solution of 8% in concentration to yield a water-soluble polymer including ethylenically unsaturated carboxylic acid monomer units and hydroxy group-containing (meth)acrylic acid ester monomer units.

Note that the chemical composition of the obtained water-soluble polymer was the same as the ratio (charging ratio) of each monomer among all monomers used in polymerization of the water-soluble polymer. Moreover, the obtained polymer B was water-soluble according to the definition in the present specification. The softening point of the polymer B was 30°C. Moreover, the 1 mass% aqueous solution viscosity was 130 mPa·s.

### <Production example: Production of particulate polymer A>

A 5 MPa pressure-resistant vessel equipped with a stirrer was charged with 65 parts of styrene, 35 parts of 1,3-butadiene, 2 parts of itaconic acid, 1 part of 2-hydroxyethyl acrylate, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to a temperature of 55°C to initiate polymerization.

Cooling was performed to quench the reaction at the point at which monomer consumption reached 95.0%. The water dispersion containing a polymer that was obtained in this manner was adjusted to pH 8 through addition of sodium hydroxide aqueous solution of 5% in concentration. Unreacted monomer was subsequently removed through thermal-vacuum distillation. Cooling was then performed to a temperature of 30°C or lower to yield a water dispersion containing a particulate polymer A formed of a styrene-butadiene copolymer (SBR). Note that the styrene-butadiene copolymer had a glass-transition temperature (Tg) of 10°C and a softening point of 33°C.

### (Production of slurry for composite particles)

A slurry for composite particles was obtained by mixing 97.3 parts of artificial graphite (volume-average particle diameter (D50): 10.0 µm; BET specific surface area: 1.76 m²/g; true density: 2.2 g/cm³) as a negative electrode active material, 1.2 parts in terms of solid content of the polymer A (true density: 1.0 g/cm³) as a water-soluble polymer, and 1.5 parts in terms of solid content of the particulate polymer A (true density: 1.1 g/cm³), further adding deionized water, and mixing and dispersing these materials.

### <Production of composite particles>

The slurry for composite particles was supplied to a spray dryer (produced by Ohkawara Kakohki Co., Ltd.) in which a rotating disc pin-type atomizer (diameter: 84 mm) rotating at a fixed rotation speed was used, and spray drying granulation was performed under conditions of a hot air temperature of 150°C and a particle collection outlet temperature of 90°C to obtain composite particles having a volume-average particle diameter (D50) of 83 µm.

### <Production of negative electrode for lithium ion secondary battery>

Production of a negative electrode for a lithium ion secondary battery was performed using a roll pressure forming apparatus. The roll pressure forming apparatus includes: a hopper; pre-forming rolls (composed of a pair of rolls) that, with respect to composite particles supplied to the hopper via a metering feeder, compress the composite particles on current collector foil that is equipped with a conductive adhesive layer; and first forming rolls (composed of a pair of rolls) and second forming rolls (composed of a pair of rolls) that further press a pre-formed product that has been formed by the pre-forming rolls.

First, current collector foil equipped with a conductive adhesive layer was set on the pair of pre-forming rolls, which were heated to 90°C and had a roll diameter of 050 mm. The current collector foil equipped with a conductive adhesive layer was copper current collector foil equipped with a conductive adhesive layer that was obtained by applying a conductive adhesive onto a copper current collector using a gravure coater and then drying the conductive adhesive. Next, the composite particles obtained as described above, as composite particles in a dry state, were supplied to the hopper via the metering feeder. Note that the hopper was provided at an upper part of the pre-forming rolls. Once the deposited amount of the composite particles inside of the hopper provided at the upper part of the pre-forming rolls reached a certain height, the roll pressure forming apparatus was operated, the composite particles were pressure formed by the pre-forming rolls to perform film formation, and a compressed layer of a negative electrode active material layer was formed on the conductive adhesive layer-equipped copper current collector foil (film formation step). Thereafter, the electrode with the pre-formed negative electrode active material layer was pressed by two 0300 mm forming rolls provided downstream of the pre-forming rolls in the roll pressure forming apparatus, which were heated to 25°C, so as to perform rolling and thereby level the surface of the electrode and increase the packing rate of the electrode mixed material layer (rolling step) such that the packing rate of the electrode mixed material layer was 76.1%. The roll pressure forming apparatus was operated continuously in this manner to produce approximately 100 m of a negative electrode for a lithium ion secondary battery. Moreover, the BET specific surface area was evaluated. The result is shown in Table 1.

### <Positive electrode for lithium ion secondary battery>

In a planetary mixer, 97 parts of an active material NMC532 based on a lithium complex oxide of Co-Ni-Mn (LiNi_{0.5}Co_{0.2}Mn_{0.3}O₂; true density: 4.5 g/cm³) as a positive electrode active material, 2 parts of acetylene black (produced by Denka Company Limited; product name: Li-100; true density: 1.9 g/cm³) as a conductive material, and 1 part in terms of solid content of an N-methyl-2-pyrrolidone solution of polyvinylidene fluoride (produced by Solvay; product name: Solef^{®} 5130 (Solef is a registered trademark in Japan, other countries, or both); true density: 1.7 g/cm³) as a binding material were added and mixed. In addition, N-methyl-2-pyrrolidone (NMP) as an organic solvent was gradually added, and stirred mixing was performed at a temperature of 25 ± 3°C and a rotation speed of 25 rpm to obtain a slurry composition for a positive electrode having a viscosity (measured using B-type viscometer; temperature: 25 ± 3°C; rotor: M4; rotor speed: 60 rpm) of 3,600 mPa·s.

The obtained slurry composition for a positive electrode was applied onto aluminum foil of 20 µm in thickness serving as a current collector by a comma coater such as to have a coating weight of 27.5 mg/cm². The aluminum foil was conveyed inside an oven having a temperature of 80°C for 2 minutes and an oven having a temperature of 120°C for 2 minutes at a speed of 300 mm/min so as to dry the slurry composition on the aluminum foil and obtain a positive electrode web having a positive electrode mixed material layer formed on the current collector.

The positive electrode mixed material layer-side of the produced positive electrode web was subsequently roll pressed in an environment having a temperature of 25 ± 3°C to obtain a positive electrode having a positive electrode mixed material layer packing rate of 75%.

### <Separator>

A separator made of a single layer of polypropylene (produced by Celgard, LLC.; product name: Celgard 2500) was prepared as a separator formed of a separator substrate.

### <Lithium ion secondary battery>

A stacked laminate cell (initial design discharge capacity equivalent to 300 mAh) was produced using the negative electrode, positive electrode, and separator obtained as described above, was arranged inside of aluminum packing, and was subjected to vacuum drying under conditions of 10 hours at 60°C. Thereafter, a LiPF₆ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was loaded into the aluminum packing as an electrolyte solution. The aluminum packing was then closed by heat sealing at a temperature of 150°C to tightly seal an opening of the aluminum packing and thereby produce a lithium ion secondary battery. This lithium ion secondary battery was used to evaluate high-temperature storage characteristics as previously described. The result is shown in Table 1.

### (Example 2)

Operations, measurements, and evaluations were performed in the same way as in Example 1 with the exception that the temperature of the pre-forming rolls was set as 50°C during film formation and the temperature of the forming rolls was set as 90°C during rolling. The results are shown in Table 1.

### (Example 3)

Operations, measurements, and evaluations were performed in the same way as in Example 1 with the exception that the temperature of the forming rolls was set as 90°C during rolling. The results are shown in Table 1.

### (Example 4)

Operations, measurements, and evaluations were performed in the same way as in Example 1 with the exception that the temperature of the forming rolls was set as 90°C during rolling and the packing rate of the negative electrode mixed material layer was set as 70.5% in the rolling step. The results are shown in Table 1.

### (Example 5)

Operations, measurements, and evaluations were performed in the same way as in Example 1 with the exception that 0.7 parts in terms of solid content of the polymer A and 0.5 parts in terms of solid content of the polymer B (true density: 1.0 g/cm³) were used instead of 1.2 parts in terms of solid content of the polymer A as water-soluble polymers in production of the slurry for composite particles and the temperature of the forming rolls was set as 90°C during rolling. The results are shown in Table 1.

### (Example 6)

Operations, measurements, and evaluations were performed in the same way as in Example 3 with the exception that the slurry for composite particles was produced as described below. The results are shown in Table 1.

### <Production of slurry for composite particles>

A slurry for composite particles was obtained by mixing 97.5 parts of artificial graphite (volume-average particle diameter (D50): 10.0 µm) as a negative electrode active material with 1.5 parts in terms of solid content of the polymer A and 1.0 parts in terms of solid content of the polymer B as water-soluble polymers, further adding deionized water, and mixing and dispersing these materials.

### (Example 7)

Operations were performed in the same way as in Example 1 to produce a negative electrode for a lithium ion secondary battery with the exception that the temperature of the forming rolls was set as 90°C during rolling and the mass per unit area was set as 22 mg/cm². Moreover, a positive electrode to go with this negative electrode was produced in the same way as in Example 1 with the exception that the coating weight of the positive electrode was changed to 37.8 mg/cm² and the speed was changed to 200 mm/min in response to the above. With the exception that production conditions of the negative electrode for a lithium ion secondary battery and the positive electrode were changed as described above, operations, measurements, and evaluations were performed in the same way as in Example 1. The results are shown in Table 1.

### (Example 8)

Operations, measurements, and evaluations were performed in the same way as in Example 7 with the exception that the composite particles were produced as described below. The results are shown in Table 1.

### <Production of composite particles>

A high-speed stirring mixer Eirich Intensive Mixer (produced by Nippon Eirich Co., Ltd.) was charged with 97.3 parts of artificial graphite (volume-average particle diameter (D50): 10.0 µm) as a negative electrode active material. A mixture obtained by mixing 1.2 parts in terms of solid content of the polymer A as a water-soluble polymer, 1.5 parts in terms of solid content of the particulate polymer A, and deionized water was fed into the mixer, and mixing was performed under conditions such that the solid content concentration at the point at which all of the mixture had been fed was 75% to produce composite particles. Next, classification was performed using a sieve having an opening size of 150 µm, and particles under the sieve were collected and dried to produce composite particles having a volume-average particle diameter (D50) of 78 µm.

### (Example 9)

Operations, measurements, and evaluations were performed in the same way as in Example 4 with the exception that a polymer C (true density: 1.0 g/cm³) produced as described below was used instead of the polymer A as a water-soluble polymer and the packing rate of the negative electrode mixed material layer was set as 76.1% in the rolling step. The results are shown in Table 1.

### <Synthesis of polymer C>

A 2 L septum-equipped flask including a stirrer was charged with 1,206 g of deionized water, was heated to a temperature of 40°C, and was thoroughly internally purged with nitrogen gas. Next, 7.3 g of acrylic acid aqueous solution of 98% in concentration as an ethylenically unsaturated carboxylic acid monomer, 28.2 g of 2-hydroxyethyl acrylate as a hydroxy group-containing (meth)acrylic acid ester monomer, 4.8 g of N-hydroxyethylacrylamide as a hydroxy group-containing vinyl monomer, and 49.5 g of acrylamide aqueous solution of 40% in concentration as a (meth)acrylamide monomer were mixed and were injected into the flask using a syringe. Thereafter, 0.6 g of an aqueous solution of sodium L-ascorbate of 10.0% in concentration as a polymerization accelerator was charged using a syringe, and, 10 minutes later, 6.0 g of an aqueous solution of potassium persulfate of 4.0% in concentration as a polymerization initiator was added into the flask using a syringe. Two hours after the start of the reaction, the temperature was raised to 55°C, and the polymerization reaction was caused to proceed. After 2 hours, 0.4 g of an aqueous solution of sodium hydrogen sulfite of 10.0% in concentration as a polymerization accelerator was charged using a syringe, and, 10 minutes later, 2.6 g of an aqueous solution of potassium persulfate of 4.0% in concentration as a polymerization initiator was added into the flask using a syringe. After 3 hours, 0.4 g of an aqueous solution of sodium hydrogen sulfite of 10.0% in concentration as a polymerization accelerator was charged using a syringe, and, 10 minutes later, 2.6 g of an aqueous solution of potassium persulfate of 4% in concentration as a polymerization initiator was added into the flask using a syringe. After 4 hours, 0.4 g of an aqueous solution of sodium hydrogen sulfite of 10.0% in concentration as a polymerization accelerator was charged using a syringe, and, 10 minutes later, 2.6 g of an aqueous solution of potassium persulfate of 4% in concentration as a polymerization initiator was added into the flask using a syringe. After 5 hours, 0.4 g of an aqueous solution of sodium hydrogen sulfite of 10.0% in concentration as a polymerization accelerator was charged using a syringe, and, 10 minutes later, 2.6 g of an aqueous solution of potassium persulfate of 4% in concentration as a polymerization initiator was added into the flask using a syringe. After 6 hours, a reaction inhibitor was added and the flask was opened to air to stop the polymerization reaction. The pH of the product was subsequently adjusted to 8 using ammonia aqueous solution of 8% in concentration to yield a water-soluble polymer including ethylenically unsaturated carboxylic acid monomer units, hydroxy group-containing (meth)acrylic acid ester monomer units, hydroxy group-containing vinyl monomer units, and (meth)acrylamide monomer units.

Note that the chemical composition of the obtained water-soluble polymer was the same as the ratio (charging ratio) of each monomer among all monomers used in polymerization of the water-soluble polymer. Moreover, the obtained polymer C was water-soluble according to the definition in the present specification. The softening point of the polymer C was 71°C. Moreover, the 1 mass% aqueous solution viscosity was 518 mPa·s.

### (Comparative Example 1)

Operations, measurements, and evaluations were performed in the same way as in Example 1 with the exception that carboxymethyl cellulose (CMC) sodium salt (true density: 1.0 g/cm³) was used instead of the polymer A as a water-soluble polymer in production of the slurry for composite particles. The results are shown in Table 1. Note that carboxymethyl cellulose sodium salt (CMC-Na) is known to generally undergo thermal decomposition without softening at 290°C or higher, which essentially makes softening point measurement difficult.

### (Comparative Example 2)

Operations, measurements, and evaluations were performed in the same way as in Comparative Example 1 with the exception that the temperature of the pre-forming rolls was set as 50°C during film formation and the temperature of the forming rolls was set as 90°C during rolling. The results are shown in Table 1.

### (Comparative Example 3)

Operations, measurements, and evaluations were performed in the same way as in Example 1 with the exception that the temperature of the pre-forming rolls was set as 50°C during film formation. The results are shown in Table 1.

### (Comparative Example 4)

Operations were performed in the same way as in Comparative Example 1 to produce a negative electrode for a lithium ion secondary battery with the exception that the temperature of the forming rolls was set as 90°C during rolling and the mass per unit area was set as 22 mg/cm². Moreover, a positive electrode to go with this negative electrode was produced in the same way as in Example 1 with the exception that the coating weight of the positive electrode was changed to 37.8 mg/cm² and the speed was changed to 200 mm/min in response to the above. With the exception that production conditions of the negative electrode for a lithium ion secondary battery and the positive electrode were changed as described above, operations, measurements, and evaluations were performed in the same way as in Comparative Example 1. The results are shown in Table 1.

### (Comparative Example 5)

Operations, measurements, and evaluations were performed in the same way as in Comparative Example 1 with the exception that the temperature of the forming rolls was set as 90°C during rolling and the packing rate of the negative electrode mixed material layer was set as 68.2% in the rolling step. The results are shown in Table 1.

**[Table 1]**

| | | | Examples | | | | | | | | | Comparative examples | | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 |
| Composite particles | Production method | | Spray granulation | Spray granulation | Spray granulation | Spray granulation | Spray granulation | Spray granulation | Spray granulation | Stirred granulation | Spray granulation | Spray granulation | Spray granulation | Spray granulation | Spray granulation | Spray granulation |
| Binding material | First water-soluble polymer | Type | Polymer A | Polymer A | Polymer A | Polymer A | Polymer A | Polymer A | Polymer A | Polymer A | Polymer C | CMC-Na | CMC-Na | Polymer A | CMC-Na | CMC-Na |
| | | Softening point (°C) | 65 | 65 | 65 | 65 | 65 | 65 | 65 | 65 | 71 | 290 | 290 | 65 | 290 | 290 |
| | Second water-soluble polymer | Type | - | - | - | - | Polymer B | Polymer B | - | - | - | - | - | - | - | - |
| | | Softening point (°C) | - | - | - | - | 30 | 30 | - | - | - | - | - | - | - | - |
| | First particulate polymer | Type | SBR | SBR | SBR | SBR | SBR | - | SBR | SBR | SBR | SBR | SBR | SBR | SBR | SBR |
| | | Softening point (°C) | 33 | 33 | 33 | 33 | 33 | - | 33 | 33 | 33 | 33 | 33 | 33 | 33 | 33 |
| Forming conditions | Temperature during film formation (°C) | | 90 | 50 | 90 | 90 | 90 | 90 | 90 | 90 | 90 | 90 | 50 | 50 | 90 | 90 |
| | Temperature during rolling (°C) | | 25 | 90 | 90 | 90 | 90 | 90 | 90 | 90 | 90 | 25 | 90 | 25 | 90 | 90 |
| Electrode physical properties | Mass per unit area (mg/cm²) | | 16 | 16 | 16 | 16 | 16 | 16 | 22 | 22 | 16 | 16 | 16 | 16 | 22 | 16 |
| | Packing rate (%) | | 76.1 | 76.1 | 76.1 | 70.5 | 76.1 | 76.1 | 76.1 | 76.1 | 76.1 | 76.1 | 76.1 | 76.1 | 76.1 | 68.2 |
| | BET specific surface area X of negative electrode (m²/g) | | 2.55 | 2.12 | 1.57 | 1.25 | 1.39 | 1.42 | 1.74 | 1.83 | 1.48 | 3.65 | 3.02 | 3.53 | 3.27 | 2.75 |
| | X/Y | | 1.45 | 1.20 | 0.89 | 0.71 | 0.79 | 0.81 | 0.99 | 1.04 | 0.84 | 2.07 | 1.72 | 2.01 | 1.86 | 1.56 |
| Evaluation | High-temperature storage characteristics | | B | B | A | SA | SA | SA | A | A | A | C | C | C | C | C |

It can be seen from Table 1 that increase of BET specific surface area of a negative electrode (i.e., cracking of a negative electrode active material) is inhibited and a lithium ion secondary battery capable of displaying excellent high-temperature storage characteristics is obtained in Examples 1 to 9 in which the pressing temperature in a film formation step and/or rolling step is set as not lower than the softening point of a water-soluble polymer. It can also be seen that increase of BET specific surface area of a negative electrode (i.e., cracking of a negative electrode active material) cannot be inhibited and high-temperature storage characteristics of a lithium ion secondary battery deteriorate in Comparative Examples 1 to 5 in which the pressing temperature in both a film formation step and a rolling step is set as not higher than the softening point of a water-soluble polymer.

In addition, close adherence between a negative electrode mixed material layer and a current collector was evaluated as follows for the negative electrode for a lithium ion secondary battery produced in each of Example 2, Example 9, and Comparative Example 2.

### <Peel strength>

The negative electrode for a lithium ion secondary battery produced in each of Example 2, Example 9, and Comparative Example 2 was cut out as a rectangle of 50 mm in length and 10 mm in width to obtain a test specimen. The test specimen was arranged with the surface at which the negative electrode mixed material layer was present facing downward, and cellophane tape (tape prescribed by JIS Z1522) was affixed to the surface of the negative electrode mixed material layer. One end of the current collector was pulled in a perpendicular direction at a pulling speed of 50 mm/min to peel off the current collector, and the stress during this peeling was measured (note that the cellophane tape was fixed to a test stage). Three measurements were made, an average value of the measurements was calculated, and this average value was taken to be the peel strength. The results are shown in Table 2. A larger value for peel strength indicates that there is stronger close adherence between the negative electrode mixed material layer and the current collector and that the negative electrode mixed material layer has better adhesiveness.

**[Table 2]**

| | Example 2 | Example 9 | Comparative Example 2 |
|---|---|---|---|
| Peel strength (N/m) | 8.1 | 14 | 6.5 |

It can be seen from Table 2 that negative electrode peel strength is higher in Examples 2 and 9 than in Comparative Example 2. This is thought to be due to negative electrode peel strength improving as a result of negative electrode active material cracking being inhibited through the pressing temperature in a film formation step and/or a rolling step being set as not lower than the softening point of a water-soluble polymer. It can also be seen that compared to Example 2, negative electrode peel strength is high in Example 9 in which the water-soluble polymer used in production of composite particles has a high 1 mass% aqueous solution viscosity.

### INDUSTRIAL APPLICABILITY

According to the present disclosure, it is possible to provide a method of producing an electrode for a lithium ion secondary battery that can inhibit cracking of an electrode active material during electrode mixed material layer formation and improve storage characteristics of a lithium ion secondary battery.

Moreover, according to the present disclosure, it is possible to provide a binder for a lithium ion secondary battery electrode that can suitably be used to form composite particles that are used in the presently disclosed production method.

Furthermore, according to the present disclosure, it is possible to provide an electrode for a lithium ion secondary battery containing the presently disclosed binder and a lithium ion secondary battery including this electrode for a lithium ion secondary battery.

## Claims

1. A method of producing an electrode for a lithium ion secondary battery comprising:
performing film formation in which composite particles in a dry state containing at least an electrode active material and a binder are pressed on a substrate to form a compressed layer on the substrate; and
performing rolling in which the compressed layer is further pressed to form an electrode mixed material layer on the substrate, wherein
the binder includes a water-soluble polymer, and
a temperature during pressing in at least one of the film formation and the rolling is set as not lower than a softening point of the water-soluble polymer.

2. The method of producing an electrode for a lithium ion secondary battery according to claim 1, wherein a temperature during pressing in both the film formation and the rolling is set as not lower than the softening point of the water-soluble polymer.

3. The method of producing an electrode for a lithium ion secondary battery according to claim 1, wherein the electrode mixed material layer has a packing rate of 70% or more.

4. The method of producing an electrode for a lithium ion secondary battery according to claim 1, wherein electrode BET specific surface area is not more than 1.5 times BET specific surface area of the electrode active material.

5. The method of producing an electrode for a lithium ion secondary battery according to claim 1, wherein the binder includes two or more types of water-soluble polymers.

6. A binder for composite particles used in the method of producing an electrode for a lithium ion secondary battery according to any one of claims 1 to 5, comprising a water-soluble polymer, wherein the water-soluble polymer has a softening point of 150°C or lower.

7. An electrode for a lithium ion secondary battery comprising the binder according to claim 6.

8. A lithium ion secondary battery comprising the electrode for a lithium ion secondary battery according to claim 7.
